(19) Europäisches Patentamt / European Patent Office / Office européen des brevets

(11) **EP 4 718 537 A1**

(12) **EUROPEAN PATENT APPLICATION**
published in accordance with Art. 153(4) EPC

(43) Date of publication:
01.04.2026 Bulletin 2026/14

(21) Application number: 24943665.0

(22) Date of filing: 31.07.2024

(51) International Patent Classification (IPC):
$H01M\ 4/525$ (2010.01)   $H01M\ 4/505$ (2010.01)
$H01M\ 4/04$ (2006.01)   $H01M\ 4/131$ (2010.01)
$C01G\ 53/00$ (2025.01)

(52) Cooperative Patent Classification (CPC):
Y02E 60/10

(86) International application number:
PCT/CN2024/109047

(87) International publication number:
WO 2026/000537 (02.01.2026 Gazette 2026/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.06.2024 CN 202410869502

(71) Applicant: Beijing Easpring Material Technology
Co., Ltd.
Beijing 100160 (CN)

(72) Inventors:
• CHEN, Feijiang
Beijing 100160 (CN)
• LIU, Yafei
Beijing 100160 (CN)
• CHEN, Yanbin
Beijing 100160 (CN)

(74) Representative: Lavoix
Bayerstraße 83
80335 München (DE)

(54) **POSITIVE ELECTRODE ACTIVE MATERIAL AND PREPARATION METHOD THEREFOR, POSITIVE ELECTRODE SHEET, BATTERY AND ELECTRIC DEVICE**

(57)    Provided are a cathode active material and a preparation method thereof, a positive electrode plate, a battery, and an electrical device. The present disclosure relates to the technical field of batteries. A change $\Delta n$ in a content of $Fe^{2+}$ in the cathode active material satisfies $\Delta n \geq 0.1$ and $\Delta n = n1-n2$; $n1$ is a content of $Fe^{2+}$ in the cathode active material prior to charging, and $n2$ is a content of $Fe^{2+}$ in the cathode active material when charging to 4.0 V; and the content of $Fe^{2+}$ = amount of $Fe^{2+}$substance in the cathode active material/(the amount of $Fe^{2+}$substance in the cathode active material + amount of $Fe^{3+}$substance in the cathode active material). Therefore, by using the cathode active material, a battery loaded with the cathode active material can have excellent energy density.

FIG. 5

# EP 4 718 537 A1

**Description**

## CROSS-REFERENCE TO RELATED APPLICATIONS

The present application claims priority and benefits of Chinese Patent Application No. 202410869502.1 filed with the China National Intellectual Property Administration on June 28, 2024, which is incorporated herein by reference in its entirety.

## FIELD

The present disclosure relates to the field of batteries, and more particularly, to a cathode active material and a preparation method thereof, a positive electrode plate, a battery, and an electrical device.

## BACKGROUND

In recent years, lithium-ion batteries have developed rapidly and are widely used in new energy vehicles, energy storage power stations, and digital 3C products. However, the price of lithium resources fluctuates greatly with market conditions. In the current industry background, sodium-ion batteries, due to the abundant and low-priced sodium resources thereof and the same working mechanism as lithium-ion batteries, can significantly reduce manufacturing cost of the batteries and are expected to be widely used in the field of low-speed electric vehicles and energy storage.

In the sodium-ion battery system, cathode materials are mainly divided into three types: layered oxides, polyanions, and Prussian blue. The layered oxide ($Na_xMO_2$) materials, by virtue of the advantages thereof, such as high energy density, good low-temperature performance, simple process and suitability for large-scale production, have been first used in the markets of mid-end and low-end passenger cars, energy storage systems, etc.

However, as the price of lithium falls, $Na_xMO_2$ materials are gradually losing the cost advantage, and there is an urgent need to further improve energy density and reduce material watt-hour cost. Therefore, how to solve the shortcomings of the above-mentioned $Na_xMO_2$ materials and improve the energy density of the material has become the subject to be studied and solved by the present disclosure.

## SUMMARY

The present disclosure aims to solve, at least to a certain extent, one of the technical problems in the related art. To this end, an object of the present disclosure is to provide a cathode active material and a preparation method thereof, a positive electrode plate, a battery, and an electrical device. The cathode active material has a high capacity, which allows a battery containing the cathode active material to have an excellent energy density.

In one aspect of the present disclosure, the present disclosure provides a cathode active material. A change $\Delta n$ in a content of $Fe^{2+}$ in the cathode active material satisfies $\Delta n \geq 0.1$ and $\Delta n = n1-n2$. n1 is a content of $Fe^{2+}$ in the cathode active material prior to charging; n2 is a content of $Fe^{2+}$ in the cathode active material when charging to 4.0 V; and the content of $Fe^{2+}$ = amount of $Fe^{2+}$ substance in the cathode active material/(amount of $Fe^{2+}$ substance in the cathode active material + amount of $Fe^{3+}$ substance in the cathode active material).

According to the cathode active material of the embodiment of the present disclosure, during the process of charging to 4.0 V, the change $\Delta n$ in the content of $Fe^{2+}$ satisfies $\Delta n \geq 0.1$, which causes more $Fe^{2+}$ to be converted into $Fe^{3+}$. The large change in the content of $Fe^{2+}$ allows more electrons to be transferred during the charge process, thereby increasing the capacity of the cathode active material, and further improving the energy density of the battery containing the cathode active material.

In addition, the cathode active material according to the above embodiment of the present disclosure may also have the following additional technical features.

In some embodiments of the present disclosure, $\Delta n \geq 0.15$.

In some embodiments of the present disclosure, n1 is greater than 50%; preferably, n1 is greater than 70%; and further preferably, n1 is greater than 80%.

In some embodiments of the present disclosure, the cathode active material includes $Na_{a1}Ni_{x1}Fe_{y1}Mn_{z1}Zn_{m1-}Ca_{n1}M_{p1}O_2$. $0.90 \leq a1 \leq 1.10$, $0 \leq x1 \leq 0.5$, $0 < y1 < 0.5$, $0 < z1 < 0.5$, $0 < m1 \leq 0.2$, $0 \leq n1 \leq 0.05$, and $0 \leq p1 \leq 0.05$; and M includes at least one of Cu, Ti, Mg, Sr, Sn, Sb, Zn, Zr, Nb, Y, W, or La.

In some embodiments of the present disclosure, $a1: (x1+y1+z1+m1+n1+p1) = (0.90$ to $1.05): 1$, preferably, $(0.95$ to $1.05): 1$; and further preferably, $(0.97$ to $1.03): 1$.

In some embodiments of the present disclosure, $0.01 < m1 \leq 0.2$, and preferably, $0.05 < m1 \leq 0.1$.

In some embodiments of the present disclosure, $0.01 < n1 \leq 0.05$.

In some embodiments of the present disclosure, M has an ionic radius r(M) satisfying r(M) $> 0.06$ nm.

In some embodiments of the present disclosure, the cathode active material is an O3-type sodium-ion battery layered oxide.

In some embodiments of the present disclosure, the cathode active material has a particle size $D_{50}$ ranging from 3 $\mu$m to 12 $\mu$m, preferably, from 4 $\mu$m to 10 $\mu$m, and further preferably, from 5 $\mu$m to 8 $\mu$m.

In some embodiments of the present disclosure, the cathode active material has a particle size distribution of $1.1 < (D_{90}-D_{10})/D_{50} < 1.6$, and preferably, $1.2 < (D_{90}-D_{10})/D_{50} < 1.4$.

In a second aspect of the present disclosure, the present disclosure provides a method for preparing the above-mentioned cathode active material. The method includes: evenly mixing a Na source, a cathode active material precursor, optionally a Zn source, optionally a Ca source, and optionally an M source according to a stoichiometric ratio, to obtain a mixed material, the cathode active material precursor including Fe; and calcining the mixed material in an oxidizing atmosphere, crushing and sieving on the mixed material, to obtain the cathode active material.

Therefore, the above-mentioned cathode active material can be prepared by this method. By adding Zn to a layered oxide of a sodium-ion battery, the initial $Fe^{2+}$ is higher, which is conducive to transferring more electrons through $Fe^{2+}/Fe^{3+}$ oxidation reaction during the charge process, providing more capacity, and thus improving the energy density of the battery.

In some embodiments of the present disclosure, a ratio of amount of Na substance to a sum of amounts of Ni, Fe, Mn, Zn, Ca, and M substance ranges from 0.90 to 1.10, and preferably, from 0.97 to 1.03.

In some embodiments of the present disclosure, a temperature of said calcining ranges from 900°C to 1100°C.

In some embodiments of the present disclosure, said calcining includes a first temperature-rising stage, a second temperature-rising stage, and a temperature-holding stage. A difference between a rate of temperature rise in the first temperature-rising stage and a rate of temperature rise in the second temperature-rising stage ranges from 1°C/min to 10°C/min

In some embodiments of the present disclosure, said calcining includes: the first temperature-rising stage: rising to a temperature T1 at a rate of temperature rise greater than or equal to 3°C/min; the second temperature-rising stage: rising to a temperature T2 at a of temperature rise smaller than or equal to 2°C/min; and the temperature-holding stage: holding the temperature in a temperature range between T2-10°C and T2+10°C for t1 hours, where 600°C<T1<800°C, 900°C≤T2≤1100°C, and 5 hours≤t1≤15 hours. Therefore, when the above conditions are satisfied, the energy density and air stability of the cathode material are maximally compatible.

In some embodiments of the present disclosure, the cathode active material precursor includes: $Ni_{x2}Fe_{y2}Mn_{z2}Zn_{m2}O_aH_b$, where $0 \leq x2 \leq 0.5$, $0 < y2 < 0.5$, $0 \leq z2 \leq 0.5$, $0 < m2 < 0.2$, $1 \leq a \leq 2$, $0 \leq b \leq 2$, and $x2+y2+z2+m2=1$.

In some embodiments of the present disclosure, the cathode active material precursor has a particle size $D_{50}$ ranging from 5 $\mu$m to 6 $\mu$m.

In some embodiments of the present disclosure, the cathode active material precursor has a particle size distribution satisfying $1.1 < (D_{90}-D_{10})/D_{50} < 1.6$.

In some embodiments of the present disclosure, the cathode active material precursor has a tap density ranging from 1.50 g/cm$^3$ to 1.80 g/cm$^3$.

In some embodiments of the present disclosure, the cathode active material precursor has a specific surface area ranging from 10 m$^2$/g to 20 m$^2$/g.

In a third aspect of the present disclosure, the present disclosure provides a positive electrode plate. The positive electrode plate includes the cathode active material according to the first aspect of the present disclosure.

In a fourth aspect of the present disclosure, the present disclosure provides a battery. The battery includes the positive electrode plate according to the third aspect of the present disclosure. Therefore, the battery has excellent electrochemical performance.

In a fifth aspect of the present disclosure, the present disclosure provides an electrical device. The electrical device includes the battery according to the fourth aspect of the present disclosure.

Additional aspects and advantages of the present disclosure will be provided in part in the following description, or will become apparent in part from the following description, or can be learned from practicing of the present disclosure.

**BRIEF DESCRIPTION OF THE DRAWINGS**

FIG. 1 is an SEM image of a cathode active material precursor prepared in Example 1 of the present disclosure;
FIG. 2 is an SEM image of a cathode active material prepared in Example 1 of the present disclosure;
FIG. 3 is an XRD graph of a cathode active material precursor prepared in Example 1 of the present disclosure;
FIG. 4 is an XRD graph of a cathode active material prepared in Example 1 of the present disclosure;
FIG. 5 is an XPS graph of element Fe of cathode active materials prepared in Example 1 and Comparative Example 1 of the present disclosure before charging and after charging to 4.0 V; and

FIG. 6 is a 0.1 C first-cycle charge and discharge curve graph of cathode active materials prepared in Example 1 and Comparative Example 1 of the present disclosure under a voltage window ranging from 2.0 V to 4.15 V.

**DETAILED DESCRIPTION**

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

The endpoints of the ranges and any values disclosed herein shall not limited to the exact ranges or values, and those ranges or values should be understood to include values close to those ranges or values. For numerical ranges, endpoints of the respective ranges, an endpoint of respective ranges and an individual point value, and individual point values may be combined with each other to obtain one or more new numerical ranges, which should be deemed to be specifically disclosed herein.

In one aspect of the present disclosure, the present disclosure provides a cathode active material. A change $\Delta n$ in a content of $Fe^{2+}$ in the cathode active material satisfies $\Delta n \geq 0.1$ and $\Delta n = n1 - n2$. n1 is a content of $Fe^{2+}$ in the cathode active material prior to charging; n2 is a content of $Fe^{2+}$ in the cathode active material when charging to 4.0 V; and the content of $Fe^{2+}$ = amount of $Fe^{2+}$ substance in the cathode active material/(amount of $Fe^{2+}$ substance in the cathode active material + amount of $Fe^{3+}$ substance in the cathode active material).

As an example, $\Delta n$ may be 0.1, 0.15, 0.2, 0.25, 0.3, 0.35, 0.4, etc. According to some other embodiments of the present disclosure, $\Delta n \geq 0.15$.

The Applicant found that when iron-containing layered oxide serves as a cathode active material, iron can provide the main capacity, and iron provides capacity through changes in valence state. When the change $\Delta n$ in the content of $Fe^{2+}$ of the above-mentioned cathode active material before and after charging satisfies $\Delta n \geq 0.1$, more $Fe^{2+}$ is converted into $Fe^{3+}$, and the large change in the content of $Fe^{2+}$ allows more electrons to be transferred during the charge process, thereby improving the capacity of the cathode active material, and further improving the energy density of the battery containing the cathode active material.

In the embodiment of the present disclosure, XPS can be used to test the content of iron with different valence states in the sodium-battery cathode active material, and XPSPEAK41 software can be used to fit and analyze the data to obtain the content of $Fe^{2+}$. n1 is obtained in an XPS test performed before charging and discharging the cathode material, and n2 is obtained in an XPS test of the cathode active material prepared into a sodium-ion battery according to a conventional method, where the sodium-ion battery is charged to 4 V at a current of 0.1 C. Furthermore, in the present disclosure, the tests of n1 and n2 are performed in the first 20 cycles of the cathode material.

It can be understood that XPS, X-ray Photoelectron Spectroscopy, is a technology used to analyze the chemical composition of the surface of materials.

In the present disclosure, during the process of charging the sodium-battery cathode active material to 4.0 V, more $Fe^{2+}$ is converted into $Fe^{3+}$, the large change of the content of $Fe^{2+}$ allows more electrons to be transferred during the charge process, thereby improving the capacity of the battery.

According to an embodiment of the present disclosure, n1 is greater than 50%. For example, n1 may be 51%, 55%, 60%, 70%, 80%, 90%, 100%, etc. Preferably, n1 is greater than 70%; and further preferably, n1 is greater than 80%. In this way, the content of initial $Fe^{2+}$ of the sodium-battery cathode active material is high. On the one hand, during the charge process, the $Fe^{2+}/Fe^{3+}$ oxidation reaction transfers electrons to provide capacity. When charged to 4.0V, more $Fe^{2+}$ can be oxidized to $Fe^{3+}$, which can transfer more electrons and provide more capacity. On the other hand, the oxidation potential of $O^{2-}/O^{-}$ can be reduced, prompting the $O^{2-}/O^{-}$ oxidation reaction of the material, which originally occurs between 4.10 V and 4.15V, to occur in advance at around 3.90 V, providing more capacity in a voltage range between 2.0 V and 4.0 V.

According to an embodiment of the present disclosure, the cathode active material includes $Na_{a1}Ni_{x1-}Fe_{y1}Mn_{z1}Zn_{m1}Ca_{n1}M_{p1}O_2$. $0.90 \leq a1 \leq 1.10$, $0 \leq x1 \leq 0.5$, $0 < y1 \leq 0.5$, $0 \leq z1 \leq 0.5$, $0 < m1 \leq 0.2$, $0 \leq n1 \leq 0.05$, and $0 \leq p1 \leq 0.05$; and M includes at least one of Cu, Ti, Mg, Sr, Sn, Sb, Zn, Zr, Nb, Y, W, or La.

As an example, a1 may be 0.90, 0.95, 1.0, 1.05, 1.10, etc.; x1 may be 0, 0.1, 0.2, 0.3, 0.4, 0.5, etc.; y1 may be 0.01, 0.1, 0.2, 0.3, 0.4, 0.5, etc.; z1 may be 0, 0.1, 0.2, 0.3, 0.4, 0.5, etc.; m1 may be 0.01, 0.05, 0.1, 0.15, 0.2, etc.; n1 may be 0, 0.01, 0.02, 0.03, 0.04, 0.05, etc.; and p1 may be 0, 0.01, 0.02, 0.03, 0.04, 0.05, etc.

By regulating the proportion of element Zn in the composition of the cathode active material within an appropriate range, the capacity of the cathode active material at low voltage (2.0 V to 4.0 V) can be greatly improved, and the average voltage can be raised, allowing the energy density of the cathode active material to be greatly improved. In addition, the introduction of the element Zn into the cathode active material can allow the average particle size of the prepared cathode active material to be larger, and the particle size of the cathode active material increases more with the increase in the content of the element Zn. The element Zn helps to improve the degree of single crystallization of the cathode active material particles and improve the compaction density of the cathode active material.

When n1 and/or p1 is not equal to 0, that is, Ca and/or M are doped in the cathode active material, by introducing Ca doping, Ca can enter a sodium layer and a transition metal layer in the cathode active material, forming a barrier to protect Na in the structure from contacting with water and carbon dioxide in the air, thereby improving air stability of the cathode active material; and furthermore, by introducing the doping element M with a larger ion radius than the main elements Ni, Fe, and Mn, and regulating the doping amount appropriately, the interlayer spacing of the cathode active material can be expanded, the rate capability can be improved, and the structural changes caused by $Na^+$ during the intercalation/deintercalation process can be alleviated, thereby improving the structural stability of the cathode active material.

According to an embodiment of the present disclosure, $x1+y1+z1+m1+n1+p1=1$.

According to an embodiment of the present disclosure, $a1: (x1+y1+z1+m1+n1+p1) = (0.90 \text{ to } 1.05): 1$, for example, $a1 : (x1+y1+z1+m1+n1+p1)$ may be $0.90: 1$, $0.95: 1$, $1.0: 1$, $1.05: 1$, etc. Preferably, $a1 : (x1+y1+z1+m1+n1+p1) = (0.95 \text{ to } 1.05): 1$; and further preferably, $a1: (x1+y1+z1+m1+n1+p1) = (0.97 \text{ to } 1.03): 1$. Therefore, a ratio of sodium ions to a sum of other metal ions is moderate, which can further increase the capacity of the cathode active material, thereby improving the energy density of the battery containing the cathode active material.

According to an embodiment of the present disclosure, $0.01<m1\leq0.2$, for example, m1 may be 0.01, 0.05, 0.1, 0.15, 0.2, etc., and preferably $0.05<m1\leq0.1$. By controlling the content of Zn in the cathode active material within the above-mentioned range, the capacity of the cathode active material at 2.0 V to 4.0 V can be greatly improved, and the average voltage can be raised, allowing the energy density of the cathode active material to be greatly improved. The element Zn helps to improve the degree of single crystallization of the cathode active material particles and improve the compaction density of the cathode active material, thereby improving the energy density.

According to an embodiment of the present disclosure, $0.01<n1\leq0.05$, for example, n1 may be 0.01, 0.02, 0.03, 0.04, 0.05, etc. Therefore, by controlling the content of Ca in the cathode active material within the above-mentioned range, the entry of Ca into the sodium layer and transition metal layer in the cathode active material can be further facilitated, forming a barrier to protect the Na in the structure from contacting with water and carbon dioxide in the air, thereby improving the air stability of the cathode active material, and allowing the battery containing the cathode active material to have excellent cycle performance.

According to an embodiment of the present disclosure, M has an ionic radius r(M) satisfying $r(M) >0.06$ nm, for example, r(M) may be 0.065 nm, 0.07 nm, 0.08 nm, 0.09 nm, 0.1 nm, 0.15 nm, etc. By controlling the ionic radius of the element M within the above-mentioned range, the interlayer spacing of the cathode active material can be expanded, the rate capability can be improved, and the structural changes caused by $Na^+$ during the intercalation/deintercalation process can be alleviated, thereby improving the structural stability of the cathode active material and improving the cycle performance of the battery containing the cathode active material.

According to an embodiment of the present disclosure, the cathode active material is an O3-type sodium-ion battery layered oxide. In this way, the capacity of the cathode active material is high, the compaction density of the cathode active material is improved, and the volume energy density of the prepared battery is increased.

According to an embodiment of the present disclosure, the cathode active material has a particle size $D_{50}$ ranging from 3 $\mu$m to 12 $\mu$m, for example, the particle size $D_{50}$ of the cathode active material may be 3 $\mu$m, 5 $\mu$m, 7 $\mu$m, 9 $\mu$m, 10 $\mu$m, 12 $\mu$m, etc., preferably, from 4 $\mu$m to 10 $\mu$m, and further preferably, from 5 $\mu$m to 8 $\mu$m. By controlling the particle size $D_{50}$ of the cathode active material within the above range, it is possible to simultaneously achieve a short migration path of sodium ions and less side reactions between the cathode active material and the electrolyte, thereby improving the cycle performance of the battery containing the cathode active material.

In the present disclosure, particle size $D_{50}$ refers to a particle size corresponding to when the cumulative volume distribution percentage reaches 50%, and is measured using a laser particle size analyzer (e.g., Malvern Master Size 3000) with reference to standard GB/T 19077-2016.

According to an embodiment of the present disclosure, the cathode active material has a particle size distribution $(K_{90})$ satisfying $1.1<(D_{90}-D_{10})/D_{50}<1.6$, and preferably, $1.2<(D_{90}-D_{10})/D_{50}<1.4$. For example, $(D_{90}-D_{10})/D_{50}$ may be 1.11, 1.2, 1.3, 1.4, 1.5, 1.59, etc. Therefore, the cathode active material has a wide particle size distribution and has a higher compaction density and a higher volume energy density.

It can be understood that $D_{10}$ refers to a particle size corresponding to when the cumulative volume distribution percentage of the cathode active material reaches 10%, $D_{50}$ refers to a particle size corresponding to when the cumulative volume distribution percentage of the cathode active material reaches 50%, and $D_{90}$ refers to a particle size corresponding to when the cumulative volume distribution percentage of the cathode active material reaches 90%. The above particle sizes can be measured using a laser particle size analyzer (such as Malvern Master Size 3000).

In a second aspect of the present disclosure, the present disclosure provides a method for preparing the above-mentioned cathode active material. According to an embodiment of the present disclosure, the method includes: S100, evenly mixing a Na source, a cathode active material precursor, optionally a Zn source, optionally a Ca source, and optionally an M source according to a stoichiometric ratio, to obtain a mixed material. The cathode active material precursor includes Fe.

According to an embodiment of the present disclosure, the Na source, the Zn source, the Ca source, and the M source may be commercially available products.

As an example, the Na source includes at least one of sodium carbonate, sodium hydroxide, sodium nitrate, or sodium oxide.

The Zn source includes at least one of $ZnO$, $ZnCO_3$, $ZnCl_2$, $Zn_3(PO_4)_2$, $ZnF_2$, $ZnCl_2$, $Zn(OH)_2$, or $ZnSi$.

The Ca source includes at least one of an oxide of Ca, a carbonate of Ca, a phosphate of Ca, a fluoride of Ca, a chloride of Ca, a hydroxide of Ca, or a silicide of Ca.

The M source includes at least one of an oxide of M, a carbonate of M, a phosphate of M, a fluoride of M, a chloride of M, a hydroxide of M, or a silicide of M.

According to an embodiment of the present disclosure, a ratio of amount of Na substance to a sum of amounts of Ni, Fe, Mn, Zn, Ca, and M substance ranges from 0.90 to 1.10, that is, $n(Na)/[n(Ni)+n(Fe)+n(Mn)+n(Zn)+n(Ca)+n(M)]$ =0.90 to 1.10. For example, the ratio may be 0.90, 0.95, 1.0, 1.05, 1.10, etc., and preferably, the ratio ranges from 0.97 to 1.03. When preparing the cathode active material, controlling the ratio of the amount of Na substance to the sum of amounts of Ni, Fe, Mn, Zn, Ca, and M substance within the above range is beneficial to the prepared cathode active material. During the process of charging to 4.0 V, the change $\Delta n$ in the content of $Fe^{2+}$ satisfies $\Delta n \geq 0.1$, which causes more $Fe^{2+}$ to be converted into $Fe^{3+}$. The large change in the content of $Fe^{2+}$ allows more electrons to be transferred during the charge process, thereby increasing the capacity of the cathode active material, and further improving the energy density of the battery containing the cathode active material.

According to an embodiment of the present disclosure, the cathode active material precursor includes: $Ni_{x2}Fe_{y2}Mn_{z2}Z_{m2}O_aH_b$, where $0 \leq x2 \leq 0.5$, $0 < y2 < 0.5$, $0 \leq z2 \leq 0.5$, $0 < m2 < 0.2$, $1 \leq a \leq 2$, $0 \leq b \leq 2$, and $x2+y2+z2+m2=1$.

As an example, x2 may be 0, 0.1, 0.2, 0.3, 0.4, 0.5, etc.; y2 may be 0.01, 0.1, 0.2, 0.3, 0.4, 0.5, etc.; z2 may be 0, 0.1, 0.2, 0.3, 0.4, 0.5, etc.; m2 may be 0, 0.01, 0.05, 0.1, 0.15, 0.2, etc.; a may be 1, 1.2, 1.4, 1.5, 1.7, 2, etc.; and b may be 0, 0.5, 1, 1.5, 2, etc.

It can be understood that during the preparation of the cathode active material, Zn may be introduced when preparing the cathode active material precursor (at this time $m2 \neq 0$); or Zn may be not introduced when preparing the cathode active material precursor, for example, the Zn source may be added when mixing the Na source, the cathode active material precursor (at this time m2=0), the optional Zn source, the optional Ca source, and the optional M source, and the mixed material is calcined. Both preparation methods are within the protection scope of the present disclosure.

As an example, the zinc source compound is selected from at least one of $ZnO$, $ZnCO_3$, $ZnCl_2$, $Zn_3(PO_4)_2$, $ZnF_2$, $ZnCl_2$, $Zn(OH)_2$, or $ZnSi$.

According to an embodiment of the present disclosure, the cathode active material precursor can be prepared by the following method: mixing a nickel salt, an iron salt, a manganese salt, and a zinc salt at a concentration ranging from 1.0 mol/L to 3.0 mol/L according to a molar ratio of Ni: Fe: Mn: Zn=x2: y2: z2: m2, to prepare a mixed salt solution; synthesizing a multi-element cathode active material precursor slurry under the protection of argon, nitrogen, or other inert atmosphere using the mixed salt solution, a complexing agent, and an alkaline aqueous solution through a continuous method; and filtering, washing, and drying the multi-element cathode active material precursor slurry, to obtain the cathode active material precursor.

According to an embodiment of the present disclosure, the cathode active material precursor has a particle size $D_{50}$ ranging from 5 $\mu$m to 6 $\mu$m, for example, $D_{50}$ may be 5$\mu$m, 5.3$\mu$m, 5.5$\mu$m, 5.8$\mu$m, 6$\mu$m, etc. By controlling the particle size of the cathode active material precursor within the above range, a cathode active material with a suitable particle size can be obtained, which can simultaneously achieve a short migration path of sodium ions and less side reactions between the cathode active material and the electrolyte, thereby improving the cycle performance of the battery containing the cathode active material precursor.

According to an embodiment of the present disclosure, the cathode active material precursor has a particle size distribution ($K_{90}$) satisfying $1.1 < (D_{90}-D_{10})/D_{50} < 1.6$, for example, $K_{90}$ may be 1.11, 1.2, 1.3, 1.4, 1.5, 1.59, etc. Therefore, the cathode active material precursor has a wide particle size distribution, and the particle size distribution of the corresponding prepared cathode active material is also wide, allowing the cathode active material to have a higher compaction density and a higher volume energy density.

According to an embodiment of the present disclosure, the cathode active material precursor has a tap density ranging from 1.50 g/cm³ to 1.80 g/cm³, for example, the tap density may be 1.50 g/cm³, 1.55 g/cm³, 1.60 g/cm³, 1.65 g/cm³, 1.70 g/cm³, 1.75 g/cm³, 1.80 g/cm³, etc.

According to an embodiment of the present disclosure, the cathode active material precursor has a specific surface area ranging from 10 m²/g to 20m²/g, for example, the specific surface area may be 10 m²/g, 12 m²/g, 15 m²/g, 17 m²/g, 20 m²/g, etc.

The method for preparing the above-mentioned cathode active material further includes: S200, calcining the mixed material in an oxidizing atmosphere, crushing and sieving on the mixed material, to obtain the cathode active material.

According to an embodiment of the present disclosure, the oxidizing atmosphere includes oxygen or air.

According to an embodiment of the present disclosure, a temperature of said calcining ranges from 900°C to 1100°C. For example, the temperature of said calcining may be 900°C, 950°C, 1000°C, 1050°C, 1100°C, etc. Therefore, by controlling the temperature of said calcining within the above range, a cathode active material with higher purity, stable structure, and high capacity can be formed, thereby improving the cycle performance and energy density of the battery containing the cathode active material.

According to an embodiment of the present disclosure, said calcining includes a first temperature-rising stage, a second temperature-rising stage, and a temperature-holding stage. A difference between a rate of temperature rise in the first temperature-rising stage and a rate of temperature rise in the second temperature-rising stage ranges from 1°C/min to 10°C/min. For example, the difference between the rate of temperature rise in the first temperature-rising stage and the rate of temperature rise in the second temperature-rising stage is 1°C/min, 2°C/min, 5°C/min, 10°C/min, etc. In this way, the energy density and air stability of the obtained cathode active material can be maximally compatible, thereby improving the energy density and cycle performance of the battery.

According to an embodiment of the present disclosure, said calcining includes: (a) the first temperature-rising stage: rising to a temperature T1 at a rate of temperature rise greater than or equal to 3°C/min; (b) the second temperature-rising stage: rising to a temperature T2 at a rate of temperature rise smaller than or equal to 2°C/min; and (c) the temperature-holding stage: holding the temperature in a temperature range between T2-10°C and T2+10°C for t1 hours. 600°C<T1<800°C. T2 is a first calcination temperature and 900°C≤T2≤1100°C. t1 is a temperature-holding calcination duration and 5 hours≤t1≤15 hours.

As an example, the rate of temperature rise in the first temperature-rising stage may be 3°C/min, 5°C/min, 8°C/min, 10°C/min, etc.; T1 may be 600°C, 650°C, 700°C, 750°C, 800°C, etc.; the rate of temperature rise in the second temperature-rising stage may be 0.5°C/min, 1°C/min, 1.5°C/min, 2°C/min, etc.; T2 may be 900°C, 950°C, 1000°C, 1050°C, 1100°C, etc., and t1 may be 5 hours, 8 hours, 10 hours, 15hours, etc.

When the above conditions are satisfied, the energy density and air stability of the cathode material are maximally compatible.

In summary, the cathode active material obtained by the above-mentioned method, compared to the existing nickel-iron-manganese ternary material, can further improve the energy density and rate capability of the material, and greatly improve the problems of poor air stability and low cycle life of the material.

In a third aspect of the present disclosure, the present disclosure provides a positive electrode plate. According to an embodiment of the present disclosure, the positive electrode plate includes the cathode active material according to the first aspect of the present disclosure or the cathode active material prepared by the method according to the second aspect.

According to an embodiment of the present disclosure, the positive electrode plate includes a positive current collector and a positive active substance layer arranged on the positive current collector. The positive active substance layer includes the above-mentioned cathode active material. The positive current collector may be a metal foil or a composite current collector (a metal material may be arranged on a polymer substrate to form the composite current collector), for example, the positive current collector may be an aluminum foil.

According to some embodiments of the present disclosure, the positive active substance layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

According to some embodiments of the present disclosure, the positive active substance layer optionally further includes a conductive agent. As an example, the conductive agent may include at least one of superconducting carbon, acetylene black, carbon black, Ketjen black, carbon dots, carbon nanotubes, graphene, or carbon nanofibers.

According to some embodiments of the present disclosure, the positive electrode plate can be prepared in the following manner. The above-mentioned components for preparing the positive electrode plate, such as the positive active material, the conductive agent, the binder, and any other components, are dispersed in a solvent (such as N-methylpyrrolidone), to form a positive electrode slurry; the positive electrode slurry is coated on the positive current collector; and after drying, cold pressing and other processes, the positive electrode plate can be obtained.

It should be noted that the features and advantages described above with respect to the cathode active material and the preparation method thereof are also applicable to the positive electrode plate and will not be described in detail here.

In a fourth aspect of the present disclosure, the present disclosure provides a battery. According to an embodiment of the present disclosure, the battery includes at least one of the positive electrode plates according to the third aspect.

As an example, the battery includes the positive electrode plate, a negative electrode plate, an electrolyte, and a separator. The separator is located between the positive electrode plate and the negative electrode plate. During the charge and discharge process of the battery, active ions intercalate and deintercalated back and forth between the positive electrode plate and the negative electrode plate. The electrolyte conducts ions between the positive electrode plate and the negative electrode plate. The separator is provided between the positive electrode plate and the negative electrode plate, mainly to prevent positive and negative electrodes from short-circuiting, while allowing ions to pass through.

According to an embodiment of the present disclosure, the negative electrode plate includes a negative current collector and a negative active substance layer arranged on the negative current collector. The negative active substance layer includes a negative active material. The negative current collector may be a metal foil or a composite current collector (a metal material may be arranged on a polymer substrate to form the composite current collector), for example, the positive current collector may be a copper foil.

According to some embodiments of the present disclosure, the negative active material may include at least one of the following materials: artificial graphite, natural graphite, soft carbon, hard carbon, silicon-based materials, tin-based materials, sodium titanate, etc.

According to some embodiments of the present disclosure, the negative active substance layer optionally further includes a conductive agent. The conductive agent may include at least one of superconducting carbon, acetylene black, carbon black, Ketjen black, carbon dots, carbon nanotubes, graphene, or carbon nanofibers.

According to some embodiments of the present disclosure, the negative active substance layer optionally further includes other additives, such as a thickener (e.g., sodium carboxymethyl cellulose (CMC-Na)) and the like.

According to some embodiments of the present disclosure, the negative electrode plate can be prepared in the following manner. The above-mentioned components for preparing the negative electrode plate, such as the negative active material, the conductive agent, and a binder are dispersed in a solvent (such as deionized water), to form a negative electrode slurry; the negative electrode slurry is coated on the negative current collector, and after drying, cold pressing, and other processes, the negative electrode plate can be obtained.

According to some further embodiments of the present disclosure, the negative electrode plate may include a sodium metal plate or a sodium alloy, such as a sodium-indium alloy.

According to some other embodiments of the present disclosure, there is no particular limitation on the type of the separator, and any known porous separator with good chemical stability and mechanical stability can be selected. As an example, the material of the separator may include at least one of glass fiber, non-woven fabric, polyethylene, polypropylene, or polyvinylidene fluoride. The separator may be a single-layer film or a multi-layer composite film, without any particular limitation. When the separator is a multi-layer composite film, the materials of each layer may be the same or different without any particular limitation.

According to some other embodiments of the present disclosure, the type of the electrolyte is not specifically limited and can be selected according to needs. For example, the electrolyte may be in a gel state or in a fully solid state. According to some specific embodiments of the present disclosure, the electrolyte adopts an electrolyte solution, and the electrolyte solution includes a sodium salt and a solvent.

According to some specific embodiments of the present disclosure, the sodium salt may include at least one of sodium hexafluorophosphate, sodium difluorooxalatoborate, sodium tetrafluoroborate, sodium bisoxalatoborate, sodium perchlorate, sodium hexafluoroarsenate, sodium bis(fluorosulfonyl)imide, sodium trifluoromethylsulfonate, or sodium bis(trifluoromethylsulfonyl)imide.

According to some specific embodiments of the present disclosure, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethylene glycol dimethyl ether, methyl ethyl sulfone, or diethyl sulfone.

In some embodiments of the present disclosure, the electrolyte optionally further includes an additive. For example, the additive may include a negative electrode film-forming additive, a positive electrode film-forming additive, and may also include an additive that can improve certain performance of the battery, such as an additive that improves overcharge performance of the battery, an additive that improves high-temperature or low-temperature performance of the battery, etc.

It should be noted that the features and advantages described above with respect to the positive electrode plate are also applicable to the solid-state battery and will not be repeated here.

In a fifth aspect of the present disclosure, the present disclosure provides an electrical device. According to an embodiment of the present disclosure, the electrical device includes the above-mentioned battery. According to an embodiment of the present disclosure, the electrical device may include but is not limited to a mobile phone, a laptop computer, an electric vehicle, etc.

It should be noted that the features and advantages described above with respect to the battery are also applicable to the electrical device and will not be repeated here.

Hereinafter, embodiments of the present disclosure will be described. The embodiments described below are exemplary and are only used to illustrate the present disclosure, and are not to be construed as limiting the present disclosure. Where specific techniques or conditions are not specified in the examples, they are performed according to techniques or conditions described in the literature in the art or according to the product description. The reagents or instruments used are conventional products that can be obtained commercially without indicating the manufacturer.

### Example 1

S100: nickel sulfate, iron sulfate, manganese sulfate, and zinc sulfate were dissolved according to a molar ratio of nickel, iron, manganese, and zinc of 25: 33: 37: 5, to obtain a 2 mol/L mixed salt solution; sodium hydroxide was dissolved into a precipitant solution with a concentration of 10 mol/L; ammonia water was dissolved into a complexing agent solution with a concentration of 8 mol/L. 100 L of the mixed salt solution, the precipitant solution, and the complexing agent solution were introduced into a reactor concurrently. At a temperature of 60°C and a pH value of 11.50 and under the protection of a nitrogen atmosphere, crystal growth of a precipitate was continuously controlled in an overflow device until an average particle size of particles grew to 5 $\mu$m. A precursor slurry was filtered and washed, and a filter cake was dried at 120°C and then sieved, to obtain a multi-element precursor A, which has a particle size distribution of $K_{90}=(D_{90}-D_{10})/D_{50}=1.3$.

S200: in an oxidizing atmosphere, the multi-element precursor A prepared in S1, CaO, yttrium oxide, and $Na_2CO_3$ according to a molar ratio of Na/(Ni+Fe+Mn+Zn+Ca+Y)=1.01: 1 (where a molar ratio of Na/Ca=1.01: 0.02 and a molar ratio of Na/Y=1.01: 0.02) were first heated to 700°C at a rate of temperature rise of 3°C/min, then heated to 1000°C at a rate of temperature rise of 1°C/min, and finally held at 1000°C for 15 hours for mixing. An O3-type single crystal cathode active material was obtained by cooling, crushing and sieving the mixture.

### Example 2

Example 2 differs from Example 1 in that the molar ratio of nickel, iron, manganese, and zinc was adjusted to 25: 33: 35: 7 in step S100. The remaining steps of the preparation method and parameters in Example 2 were the same as those in Example 1.

### Example 3

Example 3 differs from Example 1 in that yttrium oxide was replaced with magnesium oxide in step S200. The remaining steps of the preparation method and parameters in Example 3 were the same as those in Example 1.

### Example 4

Example 4 differs from Example 1 in that the molar ratio of Na/Ca was adjusted to 1.01: 0.05 in step S200. The remaining steps of the preparation method and parameters in Example 4 were the same as those in Example 1.

### Example 5

Example 5 differs from Example 1 in that the molar ratio of Na/Y was adjusted to 1.01: 0.05 in step S200. The remaining steps of the preparation method and parameters in Example 5 were the same as those in Example 1.

### Example 6

Example 6 differs from Example 1 in that the average particle size of the particles was grown to 8 $\mu$m in step S100. The remaining steps of the preparation method and parameters in Example 6 were the same as those in Example 1.

### Example 7

Example 7 differs from Example 1 in that yttrium oxide was replaced with aluminum oxide in step S200. The remaining steps of the preparation method and parameters in Example 7 were the same as those in Example 1.

### Example 8

Example 8 differs from Example 1 in that the molar ratio of nickel, iron, manganese, and zinc was adjusted to 25: 33: 41: 1 in step S100. The remaining steps of the preparation method and parameters in Example 8 were the same as those in Example 1.

**Example 9**

Example 9 differs from Example 1 in that CaO was not added, that is, a molar amount of calcium was 0 in step S200. The remaining steps of the preparation method and parameters in Example 9 were the same as those in Example 1.

**Example 10**

Example 10 differs from Example 1 in that the average particle size of the particles was grown to 14 $\mu$m in step S100. The remaining steps of the preparation method and parameters in Example 10 were the same as those in Example 1.

**Example 11**

Example 11 differs from Example 1 in that the particle size distribution of the precursor was $K_{90}=(D_{90}-D_{10})/D50=0.8$ in step S100. The remaining steps of the preparation method and parameters in Example 11 were the same as those in Example 1. The particle size distribution of the precursor was different from that in Example 1 by the following adjustments: without passing through the overflow device, the prepared solution was added to the reactor until the reactor was full, and when the particle size of the precursor in the reactor grew to satisfy the requirements, all the materials in the reactor were discharged.

**Example 12**

Example 12 differs from Example 1 in that the molar ratio of nickel, iron, manganese, and zinc was adjusted to 25: 33: 27: 15 in step S100. The remaining steps of the preparation method and parameters in Example 12 were the same as those in Example 1.

**Example 13**

Example 13 differs from Example 1 in that the molar ratio of nickel, iron, manganese, and zinc was adjusted to 25: 33: 32: 10 in step S100. The remaining steps of the preparation method and parameters in Example 13 were the same as those in Example 1.

**Comparative Example 1**

Comparative Example 1 differs from Example 1 in that the molar ratio of nickel, iron, manganese, and zinc was adjusted to 25: 33: 42: 0 (i.e., zinc sulfate was not added) in step S100. The remaining steps of the preparation method and parameters in Comparative Example 1 were the same as those in Example 1.

The compositions of the cathode active material precursors and the cathode active materials prepared in the above-mentioned examples and comparative examples are specifically shown in Table 1.

[Table 1]

| | Cathode active material precursor | Cathode active material |
|---|---|---|
| Example 1 | $(Ni_{0.25}Fe_{0.33}Mn_{0.37}Zn_{0.05})O(OH)$ | $O3\text{-}Na_{1.01}Ni_{0.240}Fe_{0.317}Mn_{0.355}Zn_{0.048}Ca_{0.020}Y_{0.020}O_2$ |
| Example 2 | $(Ni_{0.25}Fe_{0.33}Mn_{0.35}Zn_{0.07})O(OH)$ | $O3\text{-}Na_{1.01}Ni_{0.24}Fe_{0.317}Mn_{0.336}Zn_{0.067}Ca_{0.020}Y_{0.020}O_2$ |
| Example 3 | $(Ni_{0.25}Fe_{0.33}Mn_{0.37}Zn_{0.05})O(OH)$ | $O3\text{-}Na_{1.01}Ni_{0.240}Fe_{0.317}Mn_{0.355}Zn_{0.048}Ca_{0.020}Mg_{0.020}O_2$ |
| Example 4 | $(Ni_{0.25}Fe_{0.33}Mn_{0.37}Zn_{0.05})O(OH)$ | $O3\text{-}Na_{1.01}Ni_{0.232}Fe_{0.307}Mn_{0.344}Zn_{0.047}Ca_{0.05}Y_{0.02}O_2$ |
| Example 5 | $(Ni_{0.25}Fe_{0.33}Mn_{0.37}Zn_{0.05})O(OH)$ | $O3\text{-}Na_{1.01}Ni_{0.232}Fe_{0.307}Mn_{0.344}Zn_{0.047}Ca_{0.020}Y_{0.050}O_2$ |
| Example 6 | $(Ni_{0.25}Fe_{0.33}Mn_{0.37}Zn_{0.05})O(OH)$ | $O3\text{-}Na_{1.01}Ni_{0.240}Fe_{0.317}Mn_{0.355}Zn_{0.048}Ca_{0.020}Y_{0.020}O_2$ |
| Example 7 | $(Ni_{0.25}Fe_{0.33}Mn_{0.37}Zn_{0.05})O(OH)$ | $O3\text{-}Na_{1.01}Ni_{0.240}Fe_{0.317}Mn_{0.355}Zn_{0.048}Ca_{0.020}Al_{0.020}O_2$ |
| Example 8 | $(Ni_{0.25}Fe_{0.33}Mn_{0.41}Zn_{0.01})O(OH)$ | $O3\text{-}Na_{1.01}Ni_{0.240}Fe_{0.317}Mn_{0.393}Zn_{0.010}Ca_{0.020}Y_{0.02}O_2$ |
| Example 9 | $(Ni_{0.25}Fe_{0.33}Mn_{0.37}Zn_{0.05})O(OH)$ | $O3\text{-}Na_{1.01}Ni_{0.245}Fe_{0.323}Mn_{0.363}Zn_{0.049}Y_{0.020}O_2$ |
| Example 10 | $(Ni_{0.25}Fe_{0.33}Mn_{0.37}Zn_{0.05})O(OH)$ | $O3\text{-}Na_{1.01}Ni_{0.240}Fe_{0.317}Mn_{0.355}Zn_{0.048}Ca_{0.020}Y_{0.020}O_2$ |
| Example 11 | $(Ni_{0.25}Fe_{0.33}Mn_{0.37}Zn_{0.05})O(OH)$ | $O3\text{-}Na_{1.01}Ni_{0.240}Fe_{0.317}Mn_{0.355}Zn_{0.048}Ca_{0.020}Y_{0.020}O_2$ |

(continued)

|  | Cathode active material precursor | Cathode active material |
|---|---|---|
| Example 12 | $(Ni_{0.25}Fe_{0.33}Mn_{0.27}Zn_{0.15})O(OH)$ | $O3\text{-}Na_{1.01}Ni_{0.240}Fe_{0.317}Mn_{0.259}Zn_{0.144}Ca_{0.020}Y_{0.02}O_2$ |
| Example 13 | $(Ni_{0.25}Fe_{0.33}Mn_{0.32}Zn_{0.1})O(OH)$ | $O3\text{-}Na_{1.01}Ni_{0.240}Fe_{0.317}Mn_{0.307}Zn_{0.096}Ca_{0.020}Y_{0.020}O_2$ |
| Comparative Example 1 | $(Ni_{0.25}Fe_{0.33}Mn_{0.42})O(OH)$ | $O3\text{-}Na_{1.01}Ni_{0.240}Fe_{0.317}Mn_{0.403}Ca_{0.020}Y_{0.020}O_2$ |

(1) Morphology test

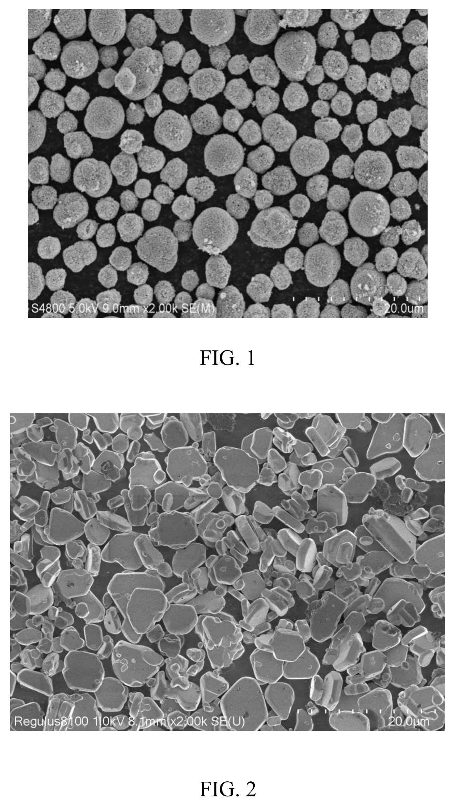

The scanning electron microscope images of the cathode active material precursors and the O3-type single crystal cathode active materials prepared in the above-mentioned examples and comparative examples have been tested according to the present disclosure. In addition, SEM images of the cathode active material precursor and the O3-type single crystal cathode active material prepared in Example 1 have been exemplarily provided, and the results were shown in FIG. 1 and FIG. 2, respectively. It can be seen from FIG. 1 that the particle size distribution of the cathode active material precursor is wide and the particle surface is dense; and it can be seen from FIG. 2 that large and small single crystal particles of the cathode active material have smooth surfaces and a wide particle size distribution, and the small particles are filled between the large particles, which has a good gradation performance.

(2) Physical property test

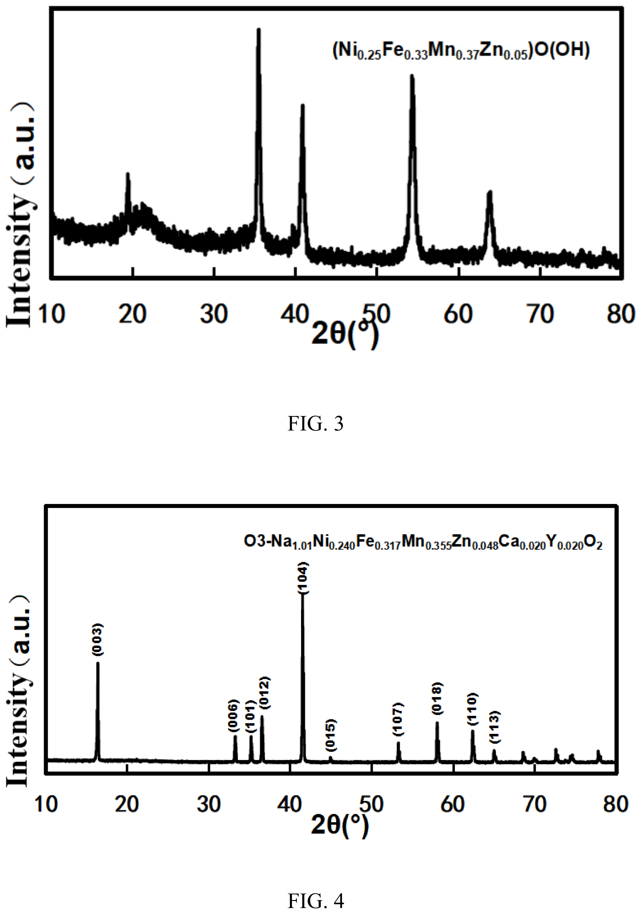

XRD graphs of the cathode active material precursors and the O3-type single crystal cathode active materials in the above-mentioned examples and comparative examples have been tested according to the present disclosure. In addition, XRD graphs of the cathode active material precursors and the O3-type single crystal cathode active materials prepared in Example 1 have been exemplarily provided, and the results were shown in FIG. 3 and FIG. 4, respectively. It can be seen from FIG. 3 that phase of the cathode active material precursor was $(Ni_{0.25}Fe_{0.33}Mn_{0.37}Zn_{0.05})O(OH)$; and it can be seen from FIG. 4 that phase of a sodium-battery single crystal cathode active material of Example 1 according to the present disclosure was a sodium-battery O3-type layered oxide ($Na_{1.01}Ni_{0.240}Fe_{0.317}Mn_{0.355}Zn_{0.048}Ca_{0.020}Y_{0.020}O_2$).

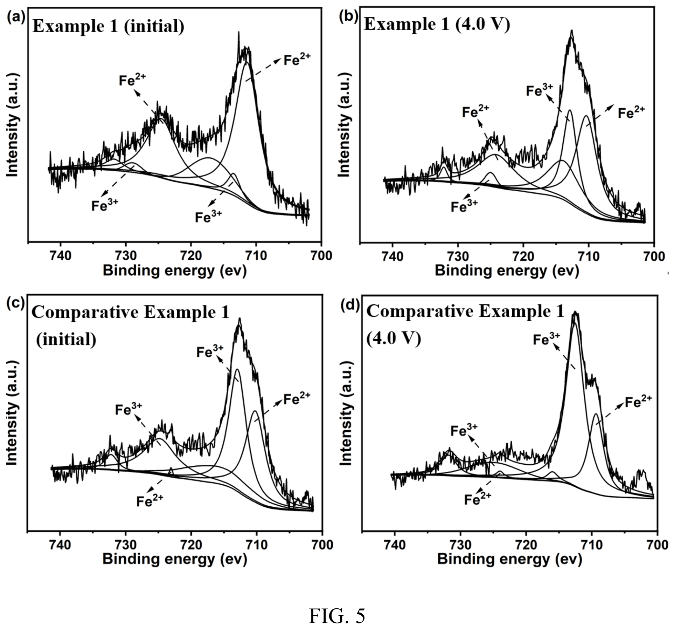

In the present disclosure, XPS test on element iron of the O3-type single crystal cathode active materials in the above-mentioned examples and comparative examples has also been performed. XPS test fitting images of the element iron of the sodium-battery cathode active materials in Example 1 and Comparative Example 1 before a first charge and when charged to 4.0 V were exemplarily provided, and the results were shown in FIG. 5.

By comparing FIG. 5a and FIG. 5c, it can be seen that the proportion of amount of $Fe^{2+}$ substance in Example 1 is much higher than that in Comparative Example 1. Further comparing XPS graphs of the element iron of the cathode active material in Example 1 before charge and when charged to 4.0 V (FIG. 5a and FIG. 5b) and XPS graphs of the element iron of the cathode active material in Comparative Example 1 before charge and when charged to 4.0 V (FIG. 5c and FIG. 5d), it can be found that more $Fe^{2+}$ is oxidized to $Fe^{3+}$ in the cathode active material of Example 1 after charging to 4.0 V, and this process can transfer more electrons to provide capacity.

(3) Moisture absorption performance test

The O3-type single crystal cathode active materials prepared in the above-mentioned examples and comparative examples were simultaneously exposed to air with a relative humidity of 45% for 0 to 6 hours. The precise moisture and residual alkali parameters thereof are specifically shown in Table 2.

[Table 2]

|  | Example 1 | | | Example 2 | | | Example 3 | | |
|---|---|---|---|---|---|---|---|---|---|
| Time (h) | 0 | 1 | 6 | 0 | 1 | 6 | 0 | 1 | 6 |
| Moisture (ppm) | 210 | 225 | 410 | 198 | 216 | 405 | 205 | 231 | 401 |
| $\Delta$Moisture (%) | 0.0 | 7.14 | 95.2 | 0.0 | 9.1 | 104.6 | 0.0 | 12.7 | 95.6 |
| $Na_2CO_3$ (wt%) | 0.15 | 0.18 | 0.28 | 0.21 | 0.24 | 0.42 | 0.14 | 0.21 | 0.30 |
| NaOH (wt%) | 0.45 | 0.48 | 0.62 | 0.42 | 0.46 | 0.59 | 0.42 | 0.45 | 0.52 |
| $\Delta(Na_2CO_3+NaOH)$ (%) | 0.0 | 26.7 | 124.4 | 0.0 | 23.8 | 140.5 | 0.0 | 57.1 | 138.1 |

(continued)

| | Example 4 | | | Example 5 | | | Example 6 | | |
|---|---|---|---|---|---|---|---|---|---|
| Time (h) | 0 | 1 | 6 | 0 | 1 | 6 | 0 | 1 | 6 |
| Moisture (ppm) | 177 | 182 | 296 | 201 | 219 | 411 | 205 | 231 | 401 |
| ΔMoisture (%) | 0.0 | 2.8 | 67.2 | 0.0 | 9.0 | 104.5 | 0.0 | 12.7 | 95.6 |
| $Na_2CO_3$ (wt%) | 0.09 | 0.12 | 0.19 | 0.21 | 0.29 | 0.41 | 0.18 | 0.21 | 0.39 |
| NaOH (wt%) | 0.35 | 0.37 | 0.45 | 0.42 | 0.46 | 0.59 | 0.42 | 0.45 | 0.59 |
| Δ($Na_2CO_3$+NaOH) (%) | 0.0 | 39.0 | 139.7 | 0.0 | 47.6 | 135.7 | 0.0 | 23.8 | 157.1 |
| | Example 7 | | | Example 8 | | | Example 9 | | |
| Time (h) | 0 | 1 | 6 | 0 | 1 | 6 | 0 | 1 | 6 |
| Moisture (ppm) | 207 | 221 | 401 | 221 | 234 | 415 | 261 | 394 | 652 |
| ΔMoisture (%) | 0.0 | 6.8 | 93.7 | 0.0 | 5.9 | 87.8 | 0.0 | 51.0 | 149.8 |
| $Na_2CO_3$ (wt%) | 0.18 | 0.21 | 0.35 | 0.22 | 0.24 | 0.36 | 0.67 | 1.47 | 2.81 |
| NaOH (wt%) | 0.45 | 0.49 | 0.57 | 0.41 | 0.49 | 0.60 | 0.97 | 1.69 | 1.71 |
| Δ($Na_2CO_3$+NaOH) (%) | 0.0 | 25.6 | 121.1 | 0.0 | 28.6 | 110.0 | 0.0 | 193.6 | 395.7 |
| | Example 10 | | | Example 11 | | | Example 12 | | |
| Time (h) | 0 | 1 | 6 | 0 | 1 | 6 | 0 | 1 | 6 |
| Moisture (ppm) | 215 | 232 | 399 | 211 | 241 | 407 | 206 | 217 | 405 |
| ΔMoisture (%) | 0.0 | 7.9 | 85.6 | 0.0 | 14.2 | 92.9 | 0.0 | 5.3 | 96.6 |
| $Na_2CO_3$ (wt%) | 0.19 | 0.21 | 0.41 | 0.18 | 0.21 | 0.35 | 0.18 | 0.21 | 0.37 |
| NaOH (wt%) | 0.46 | 0.51 | 0.64 | 0.45 | 0.41 | 0.59 | 0.46 | 0.51 | 0.66 |
| Δ($Na_2CO_3$+NaOH) (%) | 0.0 | 21.4 | 154.9 | 0.0 | 7.8 | 125.6 | 0.0 | 27.5 | 149.0 |
| | Example 13 | | | Comparative Example 1 | | | | | |
| Time (h) | 0 | 1 | 6 | 0 | 1 | 6 | | | |
| Moisture (ppm) | 214.0 | 221.0 | 405.0 | 197 | 215 | 403 | | | |
| ΔMoisture (%) | 0.0 | 3.3 | 89.3 | 0.0 | 9.1 | 104.6 | | | |
| $Na_2CO_3$ (wt%) | 0.16 | 0.22 | 0.33 | 0.17 | 0.20 | 0.37 | | | |
| NaOH (wt%) | 0.43 | 0.50 | 0.58 | 0.41 | 0.43 | 0.59 | | | |
| Δ($Na_2CO_3$+NaOH) (%) | 0.0 | 53.8 | 141.1 | 0.0 | 22.5 | 161.5 | | | |

As can be seen from the above-mentioned results, the cathode active materials containing Ca doping in examples other than Example 9, compared with the cathode active material without Ca doping in Example 9, all show lower initial moisture, water-measured $Na_2CO_3$, and alcohol-measured NaOH content, and when exposed to air for a long time, the degree of water absorption and the conversion amount of $Na_2CO_3$ and NaOH are lower. The samples with Ca doping content within the preferred range have much lower moisture gain (Δmoisture (%)) and residual alkali conversion rate (Δ($Na_2CO_3$+NaOH) (%)) than those without Ca doping, showing better air stability.

$$\Delta moisture = moisture\ (t_x - t_1)/moisture\ t_1,\ 1 \leq x \leq 6;$$

and

$$\Delta(Na_2CO_3 + NaOH) = (Na_2CO_3\ (t_x - t_1))\ /Na_2CO_3\ (t_1) + (NaOH\ (t_x - t_1)\ /NaOH\ (t_1)).$$

(4) Tests of particle size distribution $K_{90}$, median particle size $D_{50}$, compaction density, and average particle size

The particle size distribution $K_{90}$ and median particle size $D_{50}$ of the cathode active material precursors prepared in the above-mentioned examples and comparative examples, as well as the compaction density of the prepared O3-type single crystal cathode active material have been tested according to the present disclosure. The specific test results were shown in Table 3.

[Table 3]

| | $K_{90}$ of cathode active material precursors | $D_{50}$ of cathode active material precursors/$\mu$m | Compaction density of cathode active materials g/cm$^3$ | Average particle size Da of cathode active materials/$\mu$m | $K_{90}$ of cathode active materials |
|---|---|---|---|---|---|
| Example 1 | 1.3 | 5.0 | 3.48 | 2.35 | 1.3 |
| Example 2 | 1.3 | 5.0 | 3.51 | 2.47 | 1.4 |
| Example 3 | 1.3 | 5.0 | 3.49 | 2.36 | 1.3 |
| Example 4 | 1.3 | 5.0 | 3.47 | 2.34 | 1.3 |
| Example 5 | 1.3 | 5.0 | 3.47 | 2.35 | 1.4 |
| Example 6 | 1.3 | 8.0 | 3.32 | 3.24 | 1.4 |
| Example 7 | 1.3 | 5.0 | 3.51 | 2.37 | 1.3 |
| Example 8 | 1.3 | 5.0 | 3.11 | 1.88 | 1.3 |
| Example 9 | 1.3 | 5.0 | 3.42 | 2.31 | 1.4 |
| Example 10 | 1.3 | 14.0 | 3.02 | 4.15 | 1.4 |
| Example 11 | 0.8 | 5.0 | 3.07 | 2.37 | 1.0 |
| Example 12 | 1.3 | 5.0 | 3.56 | 2.62 | 1.3 |
| Example 13 | 1.3 | 5.0 | 3.53 | 2.49 | 1.4 |
| Comparative Example 1 | 1.3 | 5.0 | 3.05 | 1.69 | 1.3 |

As can be seen from the above-mentioned results, the $K_{90}$ of the cathode active material precursors obtained by the method according to the present disclosure is greater than 1 (except that the $K_{90}$ of Example 11 is less than 1), and the particle size distribution thereof is relatively wide. It can be further seen from FIG. 1 that the particle size distribution of the cathode active material precursor is relatively broad, with both large and small particles; and the morphology of the prepared cathode active materials also shows a wide distribution, with both large and small particles, as shown in FIG. 2.

By comparing the examples and comparative examples in Table 3, it can be seen that when the particle size distribution $K_{90}$ of the cathode active material precursor is within the preferred range, the sintered cathode active material can still maintain a wider particle size distribution and has a higher compaction density and a higher volume energy density (corresponding to Table 5). In Example 11, $K_{90}$ of the cathode active material precursor is outside the preferred range, and the prepared cathode active material exhibits a lower compaction density. In addition, in the present disclosure, LIBMAS single crystal particle size measurement software was used to measure the average particle size Da of the above-mentioned examples and comparative examples. By comparing Examples 1, 2, 8 and Comparative Example 1, it can be found that the introduction of the element Zn can allow the average particle size of the prepared positive electrode material to be larger, and the particle size increases more with the increase in the content of the element Zn. The element Zn helps to improve the degree of single crystallization of the particles and improve the compaction density of the material.

The formula of the sodium-battery cathode active material of the present disclosure is as follows: $Na_{a1}(Ni_{x1}Fe_{y1}Mn_{z1}Zn_{m1}Ca_{n1}M_{p1})O_2$.

(5) Ionic radius and doping amount ratio of M as well as 20(003) value, n1, and $\Delta$n test of the cathode active material

Further statistics were conducted on the ionic radius ($r_{(M)}$) and the doping amount ratio ($p1/(x1+y1+z1+m1+n1+p1)$) of the doping element M used in the cathode materials of the examples and comparative examples, and the 20(003) value of the cathode active material was tested. In addition, the amount of substance of the element iron in the O3-type single crystal cathode active material in the above-mentioned examples and comparative examples was tested by XPS test, and the data was fitted and analyzed using XPSPEAK41 software, to characterize the ratio of $Fe^{2+}$ in the sodium-battery cathode active material ($Fe^{2+}/(Fe^{2+}+Fe^{3+})$), as shown in Table 4.

[Table 4]

|  | $r_{(M)}$/nm | p1/(x1+y1+z1+m1+n1+p1) | 20(003) | n1 | Δn |
|---|---|---|---|---|---|
| Example 1 | 0.090 | 0.020 | 16.581 | 0.93 | 0.23 |
| Example 2 | 0.090 | 0.020 | 16.578 | 0.94 | 0.21 |
| Example 3 | 0.072 | 0.020 | 16.592 | 0.92 | 0.21 |
| Example 4 | 0.090 | 0.020 | 16.583 | 0.89 | 0.19 |
| Example 5 | 0.090 | 0.050 | 16.571 | 0.90 | 0.20 |
| Example 6 | 0.090 | 0.020 | 16.579 | 0.88 | 0.21 |
| Example 7 | 0.054 | 0.020 | 16.605 | 0.87 | 0.19 |
| Example 8 | 0.090 | 0.0.02 | 16.569 | 0.54 | 0.13 |
| Example 9 | 0.090 | 0.020 | 16.585 | 0.89 | 0.19 |
| Example 10 | 0.090 | 0.020 | 16.583 | 0.90 | 0.20 |
| Example 11 | 0.090 | 0.020 | 16.579 | 0.89 | 0.21 |
| Example 12 | 0.090 | 0.020 | 16.583 | 0.94 | 0.21 |
| Example 13 | 0.090 | 0.020 | 16.582 | 0.94 | 0.24 |
| Comparative Example 1 | 0.090 | 0.020 | 16.577 | 0.35 | 0.08 |

By comparing Example 1 and Example 7, it can be seen that the doping amounts of M in the two samples are consistent, but the doping element M and the ion radius thereof in Example 7 are not within the preferred range, and the 20(003) value of the cathode active material made therefrom is larger, showing a smaller interlayer spacing. By comparing Example 1 and Comparative Example 1, it can be seen that the ratio of $Fe^{2+}$ in the cathode active material containing the element Zn in Example 1 is much higher than the ratio of $Fe^{2+}$ in the cathode active material without the element Zn in Comparative Example 1.

From the above-mentioned results, it can be seen that by doping element M with large ion radius ($r_{(M)}$>0.06 nm) and regulating the doping amount of M within the preferred range, the interlayer spacing of the cathode material can be expanded, which is expected to alleviate the structural changes caused by $Na^+$ during the intercalation/deintercalation process and improve the structural stability of the material. In addition, the Zn-based cathode material has a higher initial $Fe^{2+}$, which is conducive to transferring more electrons through $Fe^{2+}/Fe^{3+}$ oxidation reaction during the charge process, providing more capacity.

(6) Electrochemical performance test of cathode active material and battery

Preparation method of the battery:

The cathode active material prepared in each example, acetylene black, and polyvinylidene fluoride (PVDF) according to a mass ratio of 95: 3: 2 were fully mixed with an appropriate amount of N-methylpyrrolidone (NMP), to form an even slurry. The slurry was coated on an aluminum foil and dried at 120°C for 12 hours, and then stamped into a positive electrode plate with a diameter of 12 mm and a thickness of 120 μm using a pressure of 100 MPa, wherein a loading amount of the cathode material was 15 mg/cm². 

Assembly of the battery: in an Ar gas glove box with a water content and an oxygen content of less than 5 ppm, the positive electrode plate, a separator, a negative electrode plate, and an electrolyte solution were assembled into a 2025-type button battery and left to stand for 6 hours. A sodium metal plate with a diameter of 17 mm and a thickness of 1 mm was used as the negative electrode plate; a Celgard 2325 porous membrane with a thickness of 25 μm was used as the separator; and a mixture of equal amounts of 1mol/L $NaPF_6$, ethylene carbonate (EC), and diethyl carbonate (DEC) were used as the electrolyte solution.

**Performance test methods**

The electrochemical performance of the button battery was tested at 25°C using Xinwei battery test system, and a charge and discharge current density at 0.1C was 140 mA/g.

1.0.1 C first charge and discharge specific capacity test method between 2.0 V and 4.0 V

The prepared button battery was subjected to charge and discharge tests at 25°C, 2.0 V to 4.0 V, and 0.1 C, to evaluate the 0.1 C first charge and discharge specific capacity of the material.

2. Average voltage test method for cathode active materials

The prepared button battery was subjected to charge and discharge tests at 25°C, 2.0 V to 4.0 V, and 0.1 C, to evaluate the 0.1 C first discharge specific energy and discharge specific capacity of the material, and the average voltage was calculated, namely: discharge specific energy/discharge specific capacity.

3. Rate capability test method

The prepared button battery was cycled twice at 25°C, 2.0 V to 4.0 V, and 0.1 C, and then cycled once at 0.2 C, 0.33 C, 0.5 C, and 1 C, respectively. The rate capability of the multi-element cathode material was evaluated by the ratio of the 0.1 C first discharge specific capacity to the 1 C discharge specific capacity; wherein the 0.1 C first discharge specific capacity is the discharge specific capacity of the button battery in the first cycle, and the 1 C discharge specific capacity is the discharge specific capacity of the button battery in the sixth cycle.

4. Cycle performance test method

The prepared button battery was cycled twice at 25°C, 2.0 V to 4.0V, and 0.1 C, and then cycled at 1 C for 80 cycles, to evaluate the capacity retention rate of the material.

5. Volume energy density test method

The volume energy density can be obtained by multiplying the 0.1C discharge specific capacity and average voltage obtained by the above-mentioned methods 1 and 2 and compaction density corresponding to each example in Table 3.

The test results were shown in Table 5.

[Table 5]

| | First charge specific capacity (0.1C/mAh/g) | First discharge specific capacity (0.1 C/mAh/g) | Average voltage (V) | 1.0 C/ 0.1 C (%) | Capacity retention rate at 25°C after 80 cycles/% | Volume energy density (Wh/L) |
|---|---|---|---|---|---|---|
| Example 1 | 159.0 | 150.4 | 3.15 | 94.8 | 90.7 | 1648.7 |
| Example 2 | 159.9 | 144.7 | 3.15 | 94.8 | 88.5 | 1599.9 |
| Example 3 | 158.7 | 149.9 | 3.14 | 93.7 | 90.1 | 1642.7 |
| Example 4 | 159.2 | 147.9 | 3.14 | 94.8 | 90.5 | 1611.5 |
| Example 5 | 159.1 | 149.3 | 3.15 | 95.1 | 90.8 | 1631.9 |
| Example 6 | 159.8 | 149.5 | 3.14 | 94.8 | 90.3 | 1558.5 |
| Example 7 | 157.9 | 144.5 | 3.14 | 91.5 | 85.2 | 1592.6 |
| Example 8 | 145.1 | 134.7 | 3.09 | 94.1 | 88.3 | 1294.5 |
| Example 9 | 159.3 | 149.5 | 3.14 | 94.7 | 91.1 | 1605.5 |
| Example 10 | 158.1 | 148.6 | 3.15 | 94.7 | 90.8 | 1413.6 |
| Example 11 | 158.3 | 148.4 | 3.14 | 94.8 | 90.5 | 1430.5 |
| Example 12 | 160.1 | 143.8 | 3.14 | 93.7 | 80.3 | 1607.5 |

(continued)

|  | First charge specific capacity (0.1C/mAh/g) | First discharge specific capacity (0.1 C/mAh/g) | Average voltage (V) | 1.0 C/ 0.1 C (%) | Capacity retention rate at 25°C after 80 cycles/% | Volume energy density (Wh/L) |
|---|---|---|---|---|---|---|
| Example 13 | 160.3 | 149.7 | 3.14 | 94.5 | 90.5 | 1659.3 |
| Comparative Example 1 | 140.4 | 130.7 | 3.07 | 90.5 | 85.1 | 1223.8 |

According to the data in Table 5, by comparing Example 1, Example 2, and Comparative Example 1, it can be seen that when the content of Zn in the cathode active material is within the preferred range, a higher charge and discharge capacity and average voltage can be exerted at 2.0 V to 4.0 V, and the energy density is higher. By comparing Example 1 and Example 7 in combination with the data in Tables 4 and 5, it can be seen that the introduction of a doping element M with a large ion radius ($r_{(M)}$>0.06 nm) and satisfying that the doping amount is within the preferred range can expand the interlayer spacing of the cathode material, improve the rate capability, and alleviate the structural changes caused by Na$^+$ in the intercalation/deintercalation process, thereby improving the structural stability and cycle stability of the material.

By comparing Example 1, Example 10, and Example 6, it can be seen that when the particle size distribution $K_{90}$ and $D_{50}$ of the cathode active material precursor are within the preferred range, the compaction density of the cathode material prepared therefrom is higher, and the volume energy density is higher. The particle size of the cathode active material precursor of Example 10 is too large, resulting in a too large particle size Da, reduced compaction density, and lower energy density than that of Example 1 and Example 6.

In Example 12, compared with Example 1, the content of Zn is too high at 0.15, the content of Fe$^{2+}$ does not increase much, and the others are the same as Example 1. In addition, the volume energy density does not change much relative to Example 1, but being too high will lead to rapid cycle decay.

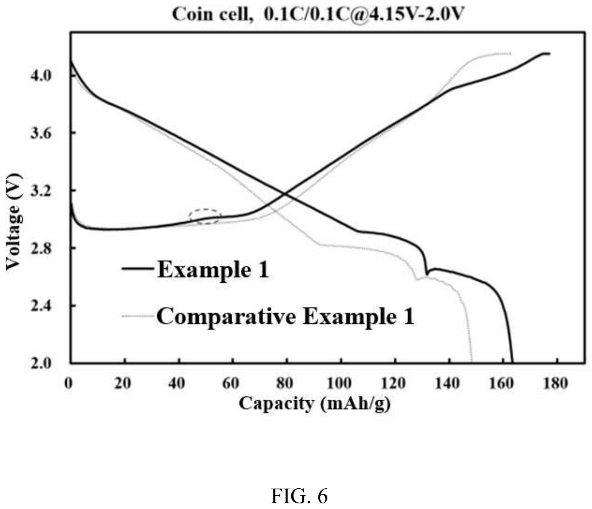

0.1 C first-cycle charge and discharge curve in a voltage window ranging from 2.0 V to 4.15 V of the sodium-ion battery cathode active material prepared in the above-mentioned Example 1 and Comparative Example 1 was also tested according to the present disclosure, as shown in FIG. 6. By comparing the charge and discharge curves of Example 1 and Comparative Example 1, it can be seen that after the doping of Zn, the charge curve has a new inflection point at 3.05 V (circle in FIG. 6), the slope exhibits a decreasing trend (Fe$^{2+}$/Fe$^{3+}$ oxidation reaction), and an upward inflection point appears at about 3.90 V (O$^{2-}$/O$^-$ oxidation reaction). Combined with the content ratio of the initial Fe$^{2+}$/ (Fe$^{2+}$+Fe$^{3+}$) of the material in Table 4, it indicates that Zn doping, on the one hand, can increase the content of initial Fe$^{2+}$ of the material and transfer more electrons through the Fe$^{2+}$/Fe$^{3+}$ oxidation reaction during the charge process to provide more capacity; and on the other hand, the Zn doping can reduce the oxidation potential of O$^{2-}$/O$^-$, and promote the O$^{2-}$/O$^-$ oxidation reaction that originally occurred between 4.10 V and 4.15 V to occur in advance at about 3.90 V, providing more capacity in a voltage range between 2.0 V and 4.0 V. Therefore, the capacity of Example 1 is greatly improved compared with Comparative Example 1 at 2.0 V to 4.0 V.

It can be seen from the above-mentioned results that in the sodium-ion battery cathode material according to the present disclosure, when the Zn-based multi-element continuous process precursor with a particle size distribution $K_{90}$ and $D_{50}$ within the preferred range is mixed with the first dopant Ca and the second dopant M ($r_{(M)}$>0.06nm) according to the preferred doping ratio and subjected to a calcining treatment, the obtained cathode material has higher energy density and rate capability, and the problems of poor air stability and low cycle life of the material can be greatly improved.

In the specification, the description of the reference terms such as "one embodiment", "some embodiments", "example", "specific example", or "some examples" means that the specific features, structures, materials, or characteristics described with reference to the embodiment or example are included in at least an embodiment or example of the present disclosure. In this specification, exemplary descriptions of the foregoing terms do not necessarily refer to the same embodiment or example. Moreover, the specific features, structures, materials, or characteristics described may be combined in any one or more embodiments or examples in a suitable manner. Furthermore, those skilled in the art may combine different embodiments or examples and features of different embodiments or examples described in this specification, unless they are contradictory to each other.

Although embodiments of the present disclosure are illustrated and described above, it can be understood that the above embodiments are illustrative and should not be construed as limitations of the present disclosure. Those skilled in the art can make changes, modifications, substitutions, and variations to the above embodiments within the scope of the present disclosure.

**Claims**

1. A cathode active material, wherein a change $\Delta n$ in a content of $Fe^{2+}$ in the cathode active material satisfies $\Delta n \geq 0.1$ and $\Delta n = n1 - n2$, where:

   n1 is a content of $Fe^{2+}$ in the cathode active material prior to charging;
   n2 is a content of $Fe^{2+}$ in the cathode active material when charging to 4.0 V; and
   the content of $Fe^{2+}$ = amount of $Fe^{2+}$ substance in the cathode active material/(amount of $Fe^{2+}$ substance in the cathode active material + amount of $Fe^{3+}$ substance in the cathode active material).

2. The cathode active material according to claim 1, wherein:

$$\Delta n \geq 0.15;$$

   and
   optionally, n1 is greater than 50%, preferably, n1 is greater than 70%, and further preferably, n1 is greater than 80%.

3. The cathode active material according to claim 1 or 2, wherein the cathode active material comprises:

   $Na_{a1}Ni_{x1}Fe_{y1}Mn_{z1}Zn_{m1}Ca_{n1}M_{p1}O_2$, where:

$$0.90 \leq a1 \leq 1.10, \ 0 \leq x1 \leq 0.5, \ 0 < y1 \leq 0.5, \ 0 \leq z1 \leq 0.5, \ 0 < m1 \leq 0.2, \ 0 \leq n1 \leq 0.05, \text{ and } 0 \leq p1 \leq 0.05;$$

   and
   M comprises at least one of Cu, Ti, Mg, Sr, Sn, Sb, Zn, Zr, Nb, Y, W, or La.

4. The cathode active material according to claim 3, wherein:

   al: (x1+y1+z1+m1+n1+p1) = (0.90 to 1.05): 1, preferably, (0.95 to 1.05): 1, and further preferably, (0.97 to 1.03): 1;
   optionally, $0.01 < m1 \leq 0.2$, and preferably, $0.05 < ml < 0.1$;
   optionally, $0.01 < n1 \leq 0.05$;
   optionally, M has an ionic radius r(M) satisfying r(M) >0.06 nm; and
   optionally, the cathode active material is an O3-type sodium-ion battery layered oxide.

5. The cathode active material according to claim 1 or 2, wherein:

   the cathode active material has a particle size $D_{50}$ ranging from 3 $\mu$m to 12 $\mu$m, preferably, from 4 $\mu$m to 10 $\mu$m, and further preferably, from 5 $\mu$m to 8 $\mu$m; and
   optionally, the cathode active material has a particle size distribution satisfying $1.1 < (D_{90}-D_{10})/D_{50} < 1.6$, and preferably, $1.2 < (D_{90}-D_{10})/D_{50} < 1.4$.

6. A method for preparing the cathode active material according to any one of claims 1 to 5, the method comprising:

   evenly mixing a Na source, a cathode active material precursor, optionally a Zn source, optionally a Ca source, and optionally an M source according to a stoichiometric ratio, to obtain a mixed material, wherein the cathode active material precursor comprises Fe; and
   calcining the mixed material in an oxidizing atmosphere, crushing and sieving the mixed material, to obtain the cathode active material.

7. The method according to claim 6, wherein:

   a ratio of amount of Na substance to a sum of amounts of Ni, Fe, Mn, Zn, Ca, and M substance ranges from 0.90 to 1.10, and preferably, from 0.97 to 1.03;
   optionally, a temperature of said calcining ranges from 900°C to 1100°C;
   optionally, said calcining comprises a first temperature-rising stage, a second temperature-rising stage, and a temperature-holding stage, and a difference between a rate of temperature rise in the first temperature-rising stage and a rate of temperature rise in the second temperature-rising stage ranges from 1°C/min to 10°C/min; and

optionally, said calcining comprises:

the first temperature-rising stage: rising to a temperature T1 at a rate of temperature rise greater than or equal to 3°C/min;

the second temperature-rising stage: rising to a temperature T2 at a rate of temperature rise smaller than or equal to 2°C/min; and

the temperature-holding stage: holding a temperature range between T2-10°C and T2+10°C for a duration of t1, where: 600°C≤T1≤800°C, 900°C≤T2≤1100°C, and 5 hours≤t1≤15 hours.

8. The method according to claim 6, wherein the cathode active material precursor comprises:

$$Ni_{x2}Fe_{y2}Mn_{z2}Zn_{m2}O_aH_b,$$

where:

$$0 \leq x2 \leq 0.5,\ 0 < y2 \leq 0.5,\ 0 \leq z2 \leq 0.5,\ 0 \leq m2 \leq 0.2,\ 1 \leq a \leq 2,\ 0 \leq b \leq 2,\ \text{and}\ x2 + y2 + z2 + m2 = 1.$$

9. The method according to any one of claims 6 to 8, wherein:

the cathode active material precursor has a particle size $D_{50}$ ranging from 5 $\mu$m to 6 $\mu$m;

optionally, the cathode active material precursor has a particle size distribution satisfying $1.1 < (D_{90} - D_{10})/D_{50} < 1.6$;

optionally, the cathode active material precursor has a tap density ranging from 1.50 $g/cm^3$ to 1.80 $g/cm^3$; and

optionally, the cathode active material precursor has a specific surface area ranging from 10 $m^2/g$ to 20$m^2/g$.

10. A positive electrode plate, comprising the cathode active material according to any one of claims 1 to 5.

11. A battery, comprising the positive electrode plate according to claim 10.

12. An electrical device, comprising the battery according to claim 11.

FIG. 1

FIG. 2

FIG. 3

FIG. 4

FIG. 5

FIG. 6

## INTERNATIONAL SEARCH REPORT

| International application No. |
|---|
| **PCT/CN2024/109047** |

### A. CLASSIFICATION OF SUBJECT MATTER

H01M4/525(2010.01)i; H01M4/505(2010.01)i; H01M4/04(2006.01)i; H01M4/131(2010.01)i; C01G53/00(2025.01)i

According to International Patent Classification (IPC) or to both national classification and IPC

### B. FIELDS SEARCHED

Minimum documentation searched (classification system followed by classification symbols)

IPC:H01M4/-; C01G53/-

Documentation searched other than minimum documentation to the extent that such documents are included in the fields searched

Electronic data base consulted during the international search (name of data base and, where practicable, search terms used)

CNABS, CNTXT, ENTXTC, DWPI, CNKI: 电池, 正极活性, 前驱体, D50, 正极, Fe, 铁, 钠, Na, O, 氧, 锌, Zn, 能量密度, O3, 煅烧, battery, positive electrode active, precursors, positive electrode, iron, sodium, zinc, energy density, calcination

### C. DOCUMENTS CONSIDERED TO BE RELEVANT

| Category* | Citation of document, with indication, where appropriate, of the relevant passages | Relevant to claim No. |
|---|---|---|
| X | CN 116799186 A (DO-FLUORIDE NEW MATERIALS CO., LTD.) 22 September 2023 (2023-09-22) description, paragraphs 0075-0079, 0131, and 0133 | 1-4, 6-12 |
| Y | CN 116799186 A (DO-FLUORIDE NEW MATERIALS CO., LTD.) 22 September 2023 (2023-09-22) description, paragraphs 0075-0079, 0131, and 0133 | 5 |
| Y | CN 118198308 A (ZHEDIAN (NINGBO BEILUN) SMART ENERGY CO., LTD.) 14 June 2024 (2024-06-14) description, paragraphs 0007 and 0008 | 5 |
| A | CN 112670497 A (CONTEMPORARY AMPEREX TECHNOLOGY CO., LTD.) 16 April 2021 (2021-04-16) description, paragraphs 0006-0028 | 1-12 |
| A | CN 116864664 A (BEIJING EASPRING MATERIAL TECHNOLOGY CO., LTD.) 10 October 2023 (2023-10-10) description, paragraphs 0005-0019 | 1-12 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **20 February 2025** | **05 March 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/109047**

**C.    DOCUMENTS CONSIDERED TO BE RELEVANT**

| Category* | Citation of document, with indication, where appropriate, of the relevant passages | Relevant to claim No. |
|---|---|---|
| A | WO 2021006128 A1 (SUMITOMO METAL MINING CO., LTD.) 14 January 2021 (2021-01-14) description, paragraphs 0011-0022 | 1-12 |

**INTERNATIONAL SEARCH REPORT**
**Information on patent family members**

International application No.

**PCT/CN2024/109047**

| Patent document cited in search report | | | Publication date (day/month/year) | Patent family member(s) | | | Publication date (day/month/year) |
|---|---|---|---|---|---|---|---|
| CN | 116799186 | A | 22 September 2023 | None | | | |
| CN | 118198308 | A | 14 June 2024 | None | | | |
| CN | 112670497 | A | 16 April 2021 | None | | | |
| CN | 116864664 | A | 10 October 2023 | None | | | |
| WO | 2021006128 | A1 | 14 January 2021 | EP | 3998238 | A1 | 18 May 2022 |
| | | | | EP | 3998238 | A4 | 13 December 2023 |
| | | | | JPWO | 2021006128 | A1 | 14 January 2021 |
| | | | | US | 2024021808 | A1 | 18 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410869502
- GB 190772016 T